# EUROPEAN PATENT APPLICATION

(11) **EP 2 613 126 A2**
(43) Date of publication of application: **10.07.2013**
(21) Application number: 12199350.5
(22) Date of filing: 24.12.2012
(51) Int. Cl.: G01D 4/00, G01F 25/00, G01F 1/00, G01F 15/00

(54) **Custody transfer system and method for gas fuel**

(30) Priority: 06.01.2012 US 201213344833
(71) Applicant: General Electric Company, Schenectady, New York 12345 (US)
(72) Inventor: Hains, John Victor, Greenville, SC South Carolina 29615 (US); Gallagher, Brian Michael, Greenville, SC South Carolina 29615 (US)
(74) Representative: Cleary, Fidelma

(57) **Abstract**

A system includes a custody transfer system (14) configured to transfer a gas fuel from a gas supply (12) to a gas turbine (16). The custody transfer system (14) includes a plurality of small flow meters (30) running in parallel with each other, each of the small flow meters (30) configured to obtain a measurement of a portion of a flow rate of the gas fuel flowing through the custody transfer system (14). Further, the custody transfer system includes a large flow meter (32) in series with the plurality of small flow meters (30), configured to obtain a measurement of a flow rate of the gas fuel flowing from the plurality of small flow meters (30). Additionally, the custody transfer system (14) includes communications circuitry (46) coupled to each of the small flow meters (30) and the large flow meter (32), configured to provide metering metrics to a flow computer (44).

## Description

### BACKGROUND OF THE INVENTION

The subject matter disclosed herein relates to custody transfer of fluids (e.g., gas or liquid) from one entity to another entity. In particular, the disclosed subject matter relates to measurements of fuels (e.g., natural gas) delivered from a supplier to a recipient.

A variety of systems, such as gas turbine systems, are powered by fuel, such as natural gas. The natural gas is often times provided by one entity (e.g, a supplier) to another entity (e.g., a recipient) via a custody transfer system. The amount of natural gas that is transferred between these operators is useful in determining amounts of gas consumed by the recipient and/or billing amounts to be charged by the supplier. A high level of accuracy is desirable in these custody transfer systems. Unfortunately, existing custody transfer systems use large flow meters that may be less accurate at low flow rates. Furthermore, existing custody transfer systems may require periodic maintenance and/or calibration of flow meters in an offline state (e.g., natural gas flow is shut down). This offline maintenance and/or calibration may be costly and inconvenient due to the loss of natural gas flow.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one aspect, a system includes a custody transfer system configured to transfer a gas fuel from a gas supply to a gas turbine. The custody transfer system includes a plurality of small flow meters running in parallel with each other, each of the small flow meters configured to obtain a measurement of a portion of a flow rate of the gas fuel flowing through the custody transfer system. The custody transfer system also includes a large flow meter in series with the plurality of small flow meters, configured to obtain a measurement of a flow rate of the gas fuel flowing from the plurality of small flow meters. Further, the custody transfer system includes communications circuitry coupled to each of the small flow meters and the large flow meter, configured to provide metering metrics to a flow computer.

In a second aspect, a flow computer is configured to obtain a plurality of first measurements from a plurality of small flow meters of a custody transfer skid, obtain a second measurement from a large flow meter of the custody transfer skid; and determine a custody transfer calculation representing an amount of gas fuel transferred through the custody transfer skid based at least in part upon the plurality of small measurements and the large measurement.

In a third aspect, a method includes receiving, at a computer, a set of flow rates of a plurality of small flow meters running in parallel. Further, the method includes receiving, at the computer, a second flow rate of a large flow meter in series with the plurality of small flow meters. Additionally, the method includes summing, via the computer, the set of flow rates to obtain a summed set of flow rates. Further, the method includes comparing the summed set of flow rates with the second flow rate to determine an accuracy of the set of flow rates and the second flow rate.

### BRIEF DESCRIPTION OF THE DRAWINGS

Embodiments of the present invention will now be described, by way of example only, with reference to the accompanying drawings in which:
FIG. 1 is a block diagram of a gas turbine system with a custody transfer skid in accordance with an embodiment;
FIG. 2 is a chart depicting the error rates of smaller flow meters as compared to larger flow meters;
FIG. 3 is a schematic diagram of a gas turbine system with a custody transfer skid enabled with multiple small flow meters operating in parallel, in accordance with an embodiment; and
FIG. 4 is a flow chart depicting a process for measuring and proving custody transfer quantities in accordance with an embodiment.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments relate to enhanced accuracy and operability in custody transfer of natural gas from a supplier to recipient through use of a custody transfer skid including multiple flow meters operating in parallel. Additionally, one or more additional flow meters may be in series with the parallel flow meters. The disclosed embodiments may enable more accurate measurements of natural gas flow in low gas flow conditions. Further, as flow meters in the skid are taken offline for maintenance and/or calibration, transfer operations may continue without an operational shutdown. Thus, the disclosed embodiments increase the accuracy of natural gas flow measurements as well as decrease the amount of downtime caused by custody transfer meter maintenance and/or calibration.

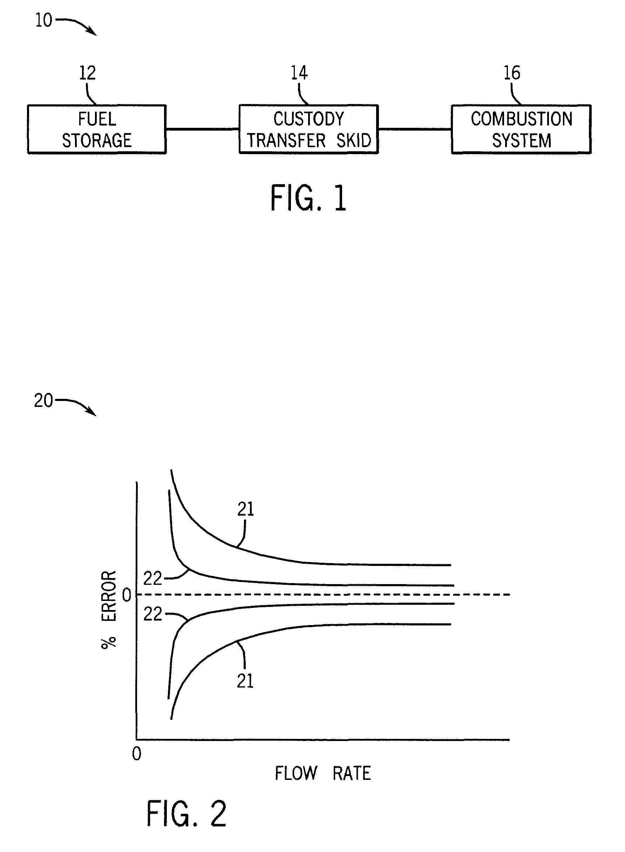

With the foregoing in mind, FIG. 1 is a block diagram of a gas turbine system 10 with a custody transfer skid 14, in accordance with an embodiment. The turbine system 10 includes a fuel storage 12 (e.g., gas storage), a custody transfer skid 14, and a combustion system 16. The combustion system 16 may be any combustion system, such as a combustion driven electrical generator. For simplicity of discussion, the combustion system 16 will be exemplified as a gas turbine 16, however, any combustion system 16 may be used. The fuel storage 12 may include one or more fuel tanks, supply pipe lines, and/or tanker trucks that store fuel, such as natural gas, useful for powering the gas turbine 16. The fuel may be any liquid or gaseous fuel. For simplicity of discussion, the fuel discussed below will be exemplified as natural gas, however, any fuel may be used. The fuel (e.g., natural gas) from the fuel storage 12 is passed through the custody transfer skid 14 to the gas turbine 16. The gas turbine 16 then consumes the natural gas, causing the natural gas levels to gradually deplete in the fuel storage 12.

The custody transfer skid 14 may be useful in determining the amount of natural gas that is flowing from the gas storage 12 to the gas turbine 16. Such information may be useful in assessing billing amounts and/or gas consumption by the gas turbine 16. The gas storage 12 may be owned by a natural gas supplier while the gas turbine is owned and/or operated by a recipient. The custody transfer skid 14 may mark the point where the natural gas is sold by the supplier to the recipient, thus transferring custody of the natural gas. As may be appreciated, it may be very desirable to provide accurate measurements, such that the supplier is aware of how much natural gas they should bill for and the recipient is aware of how much natural gas they should pay for. Further, the measurements may be useful for determine consumption amounts and/or rates by the gas turbine 16.

From time to time, gas flowing from the gas storage 12 may result in low flow situations. In low flow situations, flow meters in the custody transfer skid 14 may provide less accurate measurements. In such situations, the use of smaller flow meters may provide more accurate measurements than large flow meters. FIG. 2 is a chart 20 depicting the error rates of smaller flow meters as compared to larger flow meters under a variety of flow rates. Plot 21 illustrates the percentage of error associated with a large flow meter (e.g., 8 inch throat). Plot 22 illustrates the percentage of error associated with a smaller flow meter (e.g., 4 inch throat). As may be observed from the chart 20, as the flow rate increases, the accuracy of both the large and small flow meters increase. However, the smaller flow meter may provide more accurate results, especially in low flow situations. In one test case, a flow meter with a four inch throat yielded an approximate error percentage of 0.5% at a low flow rate. A flow meter with an eight inch throat yielded an approximate error percentage of 2.0% at at the same low flow rate. Thus, the larger throated flow meter provided a significantly higher percentage of error in low flow conditions.

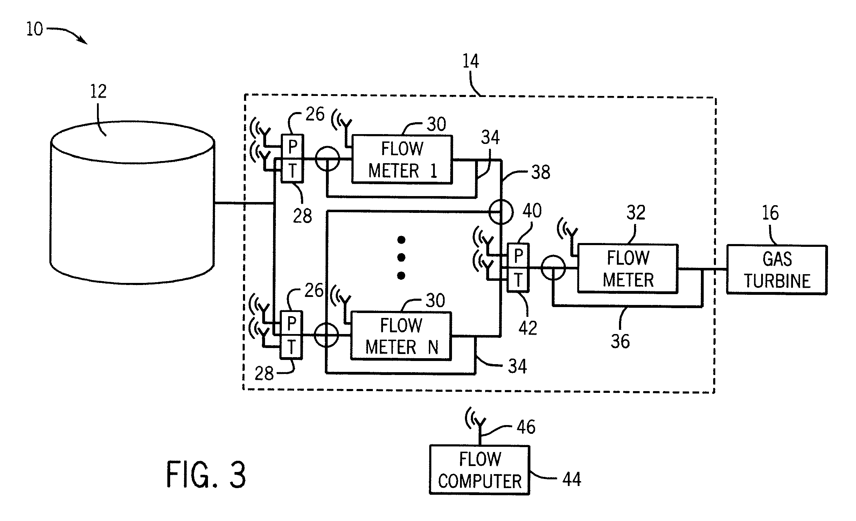

To remedy the less accurate measurements provided by larger meters in low flow situations, multiple smaller flow meters may run in parallel. FIG. 3 is a schematic diagram of a gas turbine system 10 with a custody transfer skid 14 enabled with multiple small flow meters 30 operating in parallel, in accordance with an embodiment. As previously discussed, gas flowing from the gas storage 12 flows through the custody transfer skid 14 through to the gas turbine 16. The custody transfer skid 14 may measure the flow rates, temperatures, and/or pressure measurements of the gas flowing through the custody transfer skid 14. For example, the custody transfer skid 14 may include pressure transmitters 26 and 40, temperature transmitters 28 and 42, and flow meters 30 and 32. The pressure transmitters 26 and 40 along with the temperature transmitters 28 and 42 may be useful in determining a density of the gas supply, such that more accurate measurements may be taken. Further, some flow meters use pressure measurements in their flow calculations. To increase the accuracy of measurements, the pressure transmitters 26 and 40 and temperature transmitters 28 and 42 may be disposed directly upstream or downstream of the flow meters 30 and 32 within a short distance. The temperature, pressure, and/or flow measurements may be transmitted to a flow computer 44 via wired and/or wireless communications circuitry 46, such that the flow computer may use the data to determine the total amount of gas transferred through the custody transfer skid 14. Additionally, the custody transfer skid 14 may include rerouting pathways (e.g., bypass loops 34 and 36 and/or rerouting pathway 38).

Rather than providing one large flow meter for initial measurement of the inlet gas flow, multiple smaller flow meters 30 may be arranged in parallel to measure the flow rate. For example, in some embodiments, the number of smaller flow meters 30 may be 2 to 20 or more, e.g., 2, 3, 4, 5, 6, 7, 8, 9, or 10 parallel flow meters 30. The smaller flow meters 30 may include a summed capacity that is approximately equal to or greater than the capacity of a single large flow meter typically used for initial inlet gas flow measurement. For example, in certain embodiments, the capacity of each of the small flow meters 30 may be 1/N of the capacity of the large flow meter, where N is the number of small flow meters 30. Further, in certain embodiments, the small flow meters 30 may have a percentage of capacity less than the large flow meter.

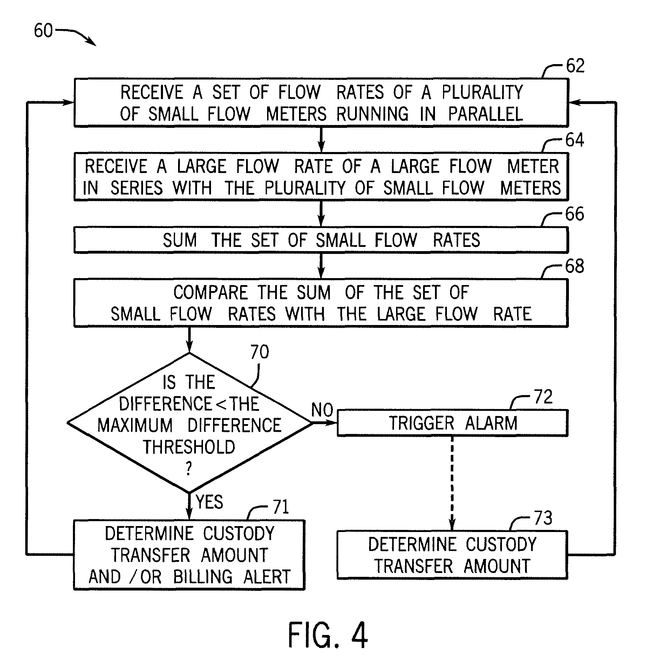

Under normal operating conditions, the inlet gas supply may be routed to the plurality of small flow meters 30 with associated pressure transmitters 26 and temperature transmitters 28. Each of the pressure transmitters 26 and temperature transmitters 28 may transmit pressure and temperature measurements of the gas flowing through an associated small flow meter 30. Each small flow meter 30 may take flow measurements in parallel of gas flowing through the plurality of small flow meters 30. The flow measurements, temperature measurements, and/or pressure measurements may be transmitted to the flow computer 44 through the communications circuitry 46. As will be discussed in more detail below with regards to FIG. 4, the flow computer 44 may interpret the measurements to determine the total amount of gas flowing through the custody transfer skid 14.

After passing through the small meters 30, the gas may be consolidated and routed through a large flow meter 32, which may include an associated pressure transmitter 40 and/or temperature transmitter 42. The large flow meter 32 may provide a proving mechanism for the measurements taken from the smaller flow meters 30. Proving verifies the accuracy of a previously taken custody transfer measurement. Under some custody transfer regulations, a proving mechanism may be required in order to bill a recipient for transferred gas. The measurements from the large flow meter 32 and the associated pressure transmitter 40 and/or temperature transmitter 42 may be transmitted to the flow computer 44, which may interpret the measurement to prove the measurements provided by the smaller flow meters 30. After flowing through the large flow meter 32, the gas may be directed to the gas turbine 16 where it may be consumed.

The flow meters 30 and 32 may be similar or different. Each of the flow meters 30 and 32 may each be of a different size, type, manufacturer, etc. For example the flow meters 30 and 32 may be Coriolis meters, ultrasonic meters, turbine meters, Venturi meters, orifice meters, or a combination thereof. Further, each of the flow meters 30 may have varying maximum flow rates. However, the maximum flow rate of each of the flow meters 30, when summed, may be equal to the maximum flow rate of the large flow meter 32.

In certain situations, it may be desirable or necessary to remove one of the flow meters in the custody transfer skid 14. For example, from time to time, smaller flow meters 30 and/or large flow meter 32 may require maintenance and/or calibration. For example, due to industry regulation, flow meters may be subject to calibration once every year. Such calibration may involve removing the flow meter and shipping it to a lab where the calibration may occur. In situations where it is desirable to take one of the flow meters 30 or 32 offline, the rerouting pathways (e.g., bypass looks 34 and 36 and/or rerouting pathway 38) may be useful in enabling the gas to continue to flow through the custody transfer skid 14 despite one of the flow meters 30 or 32 being offline/removed.

In the illustrated embodiment, each of the smaller flow meters 30 includes a bypass loop 34. Further, the large flow meter 32 includes a bypass loop 36. The bypass loops 34 and 36 enable the flow meters 30 and 32 to be taken offline by rerouting the gas supply around the flow meters 30 and 32. Thus, if an operator desires to take a first flow meter 30 (e.g., meter 1) offline, the bypass loop 34 associated with flow meter 1 may be activated to reroute the gas supply upstream of the first flow meter 30. As previously discussed, certain custody transfer regulations may demand proving of flow meter accuracy in order to bill a recipient. In certain embodiments the large flow meter 32 may still be taken offline via bypass loop 36 such that the gas turbine 16 maintains a gas supply. However, in such a scenario, a proving flow meter may not be active, and thus billing during the time of inactivity may be limited.

In some embodiments, meter proving may be enabled without removing meters from the system 10. For example, the large flow meter 32 may be proved by the measurements of one of the flow meters 30. By comparing the flow readings of one of the flow meters 30 with the large flow meter 32, the accuracy of the flow meter 32 may be proved without removing the large flow meter 32 from the system 10.

As previously mentioned, a flow computer 44 may determine custody transfer quantities based upon measurements provided from the custody transfer skid 14. FIG. 4 is a flow chart depicting a process 60 for measuring and proving custody transfer quantities via the flow computer 44, in accordance with an embodiment. The flow computer 44 receives a set of flow rates from a plurality of small flow meters 30 running in parallel (block 62). Additionally, the flow computer 44 receives a large flow rate of a large flow meter 32 in series with the plurality of small flow meters 30 (block 64). The flow rates from the plurality of small flow meters 30 are summed (block 66). The flow computer compares the summed flow rates with the flow rate provided from the large flow meter 32 (block 68) to determine an accuracy of the summed flow rates and the flow rate provided from the large flow meter 32.

The flow computer may determine whether or not the difference between the summed flow rates and the flow rate provided from the large flow meter 32 is less than a maximum difference threshold (block 70). The maximum difference threshold is a threshold value that represents the maximum deviation between the measurements from the small flow meters 30 and the large flow meter 32. If the difference between the sum of flow rates from the small flow meters 30 and the flow rate from the large flow meter 32 is less than the maximum difference threshold, the flow computer may determine a confident custody transfer quantity and/or billing amount (block 71), as the proving flow meter (e.g., large flow meter 32) provided a custody transfer quantity within a threshold of deviation of the small flow meters 30. The determined custody transfer quantity may be based upon the summed flow measurements of the small flow meters 30, the flow measurements of the large flow meter 32, or a combination of both. For example, in some embodiments, the determination of the custody transfer quantity and the billing amount may be determined based upon an average taken between the summed flow measurements and the large flow measurement. In alternative embodiments, a weighted average may be useful in determining the custody transfer quantities, such that the measurements from either the summed flow measurements or the large measurement is given more credence. Further the flow computer 44 may determine a billing amount based upon the confident custody transfer quantity. The flow computer 44 may then cycle back to block 62 to obtain further measurements.

When the difference between the summed flow measurements from the small flow meters 30 and the flow rate from the large flow meter 32 is greater than or equal to the maximum difference threshold (or is less than or equal to a minimum accuracy threshold), an alarm may be triggered (block 72). The alarm may notify operators of problems with the custody transfer skid 14, such that remedial measures may be taken. For example, the alarm may alert the operator that the proving of the summed measurements cannot verify the accuracy of the summed measurements. Nonetheless, the flow computer 44 may determine a less-confident custody transfer amount (block 73). The determined custody transfer quantity may be based upon the summed flow measurements of the small flow meters 30, the flow measurements of the large flow meter 32, or a combination of both. For example, in some embodiments, the determination of the custody transfer quantity may be determined based upon an average taken between the summed flow measurements and the large flow measurement. In alternative embodiments, a weighted average may be useful in determining the custody transfer quantities, such that the measurements from either the summed flow measurements or the large measurement is given more credence. Further, in some embodiments the lower of the summed flow measurements from the small flow meters 30 and the large meter 32 may determine the less-confident custody transfer amount. Because the custody transfer quantity could not be proved within the maximum difference threshold, the flow computer 44 may be enabled to limit billing calculation based upon the less-confident custody transfer amount. In some embodiments, due to billing regulations, billing may be suspended until proving accuracy is restored. The flow computer 44 may the cycle back to block 62 to obtain further flow measurements.

Technical effects of the invention include a custody transfer skid that is enabled to make more accurate custody transfer quantity measurements. For example, in low flow situations, smaller flow meters may provide increased accuracy over larger flow meters. By providing multiple smaller flow meters, the same quantity of gas may flow through the custody transfer skid, while increasing the accuracy of the flow measurements. Further, by utilizing a plurality of flow meters, there may be increased redundancy, such that one or more flow meters may be taken offline while the custody transfer skid is still enabled to pass a gas supply to downstream components, such as a gas turbine.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a custody transfer system configured to:
      obtain a plurality of first measurements from a plurality of small flow meters of a custody transfer skid;
      obtain a second measurement from a large flow meter of the custody transfer skid, wherein each small flow meter has a smaller flow capacity than the large flow meter; and
      determine a custody transfer calculation representing an amount of gas fuel transferred through the custody transfer skid based at least in part upon the plurality of first measurements and the second measurement.
2. The system of clause 1, wherein the flow computer is configured to sum the plurality of first measurements to obtain a first measurement summation.
3. The system of clause 2, wherein the flow computer is configured to compare the first measurement summation with the second measurement to determine a difference between the first measurement summation and the second measurement.
4. The system of clause 2 or 3, wherein the flow computer is configured to trigger an audible alarm, a visual alarm, or both when difference is above a maximum difference threshold.
5. The system of any of clauses 1 to 4, wherein the flow computer is configured to:
   calculate a transfer amount of the gas fuel that is flowing through the custody transfer skid using the first measurement summation, and
   verify the amount of the gas fuel by comparing the transfer amount to the second measurement.
6. The system of any of clauses 1 to 5, wherein the flow computer is configured to calculate a billing amount for the gas fuel transferred through the custody transfer skid based at least upon the custody transfer calculation, the first measurement summation, and the second measurement.

## Claims

1. A system comprising:
a custody transfer system (14) configured to transfer a gas fuel from a gas supply (12) to a gas turbine (16), comprising:
a plurality of small flow meters (30) arranged in parallel with each other, wherein each of the small flow meters (30) is configured to obtain a first measurement of a portion of a flow rate of the gas fuel flowing through the custody transfer system; and
a large flow meter (32) in series with the plurality of small flow meters (30), wherein the large flow meter (32) is configured to obtain a second measurement of the flow rate of the gas fuel flowing through the custody transfer system (14), wherein each small flow meter (30) has a smaller flow capacity than the larger flow meter (32).

2. The system of claim 1, wherein the plurality of small flow meters (30) and the large flow (32) meter comprise a Coriolis flow meter, an ultrasonic flow meter, a turbine meter, a Venturi flow meter, an orifice flow meter, or a combination thereof.

3. The system of claim 1 or 2, wherein the small flow meters (30) have different flow capacities relative to one another.

4. The system of any of claims 1 to 3, wherein each of the small flow meters (30) has a first maximum flow rate, the large flow meter (32) has a second maximum flow rate, and a summation of the first maximum flow rates of the small flow meters (30) is equal to the second maximum flow rate of the large flow meter (32).

5. The system of any of claims 1 to 4, comprising a first bypass passage (34) for each of the small flow meters (30) and a second bypass passage (36) for the large flow meter (32), wherein each first bypass passage (34) is configured to enable the gas fuel to flow without flowing through the respective small flow meter (30), and the second bypass passage (36) is configured to enable the gas fuel to flow without flowing through the large flow meter (32).

6. The system of any preceding claim, comprising a flow computer (44) configured to:
obtain a summed flow measurement by summing the first measurements of the plurality of small flow meters (30); and
determine a custody transfer calculation representing an amount of gas fuel transferred through the custody transfer system (14) based at least in part upon the summed flow measurement and the second measurement of the large flow meter (32).

7. The system of claim 6, comprising:
at least one pressure transmitter (26,40), wherein each pressure transmitter (26,40) is disposed near each of the small flow meters (30) and the large flow meter (32), configured to provide a pressure measurement of the gas fuel; and
at least one temperature transmitter (28,42) disposed near each of the small flow meters (30) and the large flow meter (32), wherein each temperature transmitter (28,42) is configured to provide a temperature measurement of the gas fuel;
wherein the flow computer (44) is configured to determine the custody transfer calculation based at least in part upon the first measurement of a portion of a flow rate and the second measurement of the flow rate, the pressure measurements, and the temperature measurements.

8. The system of claim 6, comprising:
a first pressure transmitter (26) disposed at a consolidation point downstream of each of the small flow meters (30), wherein the first pressure transmitter (26) is configured to provide a first pressure measurement of all of the gas fuel flowing through the small flow meters (30);
a second pressure transmitter (40) disposed near the large flow meter (32), wherein the second pressure transmitter (40) is configured to provide a second pressure measurement of the gas fuel flowing through the large flow meter (32);
a first temperature transmitter (28) disposed at the consolidation point downstream of each of the small flow meters (30), wherein the first temperature transmitter (28) is configured to provide a first temperature measurement of all of the gas fuel flowing through the small flow meters (30);
a second temperature transmitter (42) disposed near the large flow meter (32), wherein the second temperature transmitter (42) is configured to provide a second temperature measurement of the gas fuel flowing through the large flow meter (32);
wherein the flow computer (44) is configured to:
determine the custody transfer calculation based at least in part upon the first measurement of a portion of a flow rate and the second measurement of the flow rate, the first and second pressure measurements, and the first and second temperature measurements.

9. The system of any preceding claim, wherein the flow capacities of the small flow meters (30) is less than or equal to approximately 50% of the flow capacity of the large flow meter (32).

10. The system of any preceding claims 6 to 9, wherein the flow computer (44) is configured to determine a billing point based at least in part upon the summed flow measurement and the measurement of the large flow meter (32).

11. A method, comprising:
receiving, at a computer (44), a set of flow rates of a plurality of small flow meters (30) running in parallel;
receiving, at the computer (44), a second flow rate of a large flow meter (32) in series with the plurality of small flow meters (30);
summing, via the computer (44), the set of flow rates to obtain a summed set of flow rates; and
comparing the summed flow rate with the second flow rate to determine an accuracy of the set of flow rates and the second flow rate.

12. The method of claim 11, comprising triggering an alarm when the accuracy is below a minimum accuracy threshold.

13. The method of claim 11 or 12, comprising:
receiving a first pressure measurement of the gas fuel flowing through the plurality of small flow meters (30);
receiving a first temperature measurement of the gas fuel flowing through the plurality of small flow meters (30);
receiving a second pressure measurement of the gas fuel flowing through the large flow meter (32);
receiving a second temperature measurement of gas fuel flowing through the large flow meter (32);
calculating a custody transfer measurement based at least in part upon the set of flow rates, the second flow rate, the first and second pressure measurements, and the first and second temperature measurements.

14. The method of any of claims 11 to 13, comprising calculating a billing amount based at least in part upon the custody transfer measurement, the summed flow rate, and the second flow rate.
